# EUROPEAN PATENT SPECIFICATION

(11) **EP 4 552 799 B1**
(45) Date of publication and mention of the grant of the patent: **14.10.2026**
(21) Application number: 23834535.9
(22) Date of filing: 26.05.2023
(51) Int. Cl.: G01M 3/32, H01M 10/42, B25B 11/00, B23Q 3/06

(54) **PRESSING MECHANISM, GAS TIGHTNESS TEST PRESSING DEVICE, AND GAS TIGHTNESS TEST SYSTEM**
PRESSMECHANISMUS, GASDICHTE TESTPRESSVORRICHTUNG UND GASDICHTE TESTANLAGE
MÉCANISME DE PRESSION, DISPOSITIF DE PRESSION DE TEST D'ÉTANCHÉITÉ AU GAZ ET SYSTÈME DE TEST D'ÉTANCHÉITÉ AU GAZ

(30) Priority: 05.07.2022 CN 202221715326 U
(43) Date of publication of application: 14.05.2025
(73) Proprietor: Contemporary Amperex Technology Co., Limited, Ningde, Fujian 352100 (CN)
(72) Inventor: HE, Muqing, Ningde, Fujian 352100 (CN); WANG, Shande, Ningde, Fujian 352100 (CN); ZHOU, Guangwei, Ningde, Fujian 352100 (CN)
(74) Representative: Ran, Handong
(86) International application number: PCT/CN2023/096426
(87) International publication number: WO 2024/007761

(56) References cited:
- CN-A- 103 170 859
- CN-A- 104 236 818
- CN-A- 104 889 775
- CN-A- 110 132 506
- CN-U- 209 043 555
- CN-U- 212 858 618
- CN-U- 216 746 614
- CN-U- 218 254 704
- JP-A- H1 082 713

## Description

### Cross-Reference to Related Applications

The present application refers to Chinese patent application no. 2022217153269, filed on July 05, 2022, and entitled "HOLD-DOWN MECHANISM, AIRTIGHTNESS TESTING HOLD-DOWN DEVICE AND AIRTIGHTNESS TESTING SYSTEM".

### Technical Field

The present application relates to the technical field of testing apparatuses, and in particular to a hold-down mechanism, an airtightness testing hold-down device and an airtightness testing system.

### Background Art

During airtightness testing of products, for example, airtightness testing of battery packs, the products need to be inflated inside and held down outside in order to achieve a required internal pressure for testing. However, the traditional hold-down tooling structure, due to its structural design flaws, has poor compatibility and cannot meet the hold-down requirements of different surface profiles in testing.

### Summary of the Invention

Based on this, it is necessary to provide a hold-down mechanism, an airtightness testing hold-down device and an airtightness testing system, which have high compatibility and can meet the hold-down requirements of different surface profiles in testing.

In a first aspect, the present application provides a hold-down mechanism, including: a bearing member; at least two hold-down structures, disposed apart on the bearing member, wherein each of the hold-down structures has a hold-down face, the hold-down structure is configured to be movable on the bearing member to adjust a distance D between the hold-down face and the bearing member in a preset direction; and a locking structure, used to restrict a moving operation of the hold-down structure.

In the above-mentioned hold-down mechanism, at least two hold-down structures are arranged on a bearing member and are the hold-down structures are configured to be movable on the bearing member. During testing, each of the hold-down structures is pressed against a unit

### Cross-Reference to Related Applications

The present application refers to Chinese patent application no. 2022217153269, filed on July 05, 2022, and entitled "HOLD-DOWN MECHANISM, AIRTIGHTNESS TESTING HOLD-DOWN DEVICE AND AIRTIGHTNESS TESTING SYSTEM".

### Technical Field

The present application relates to the technical field of testing apparatuses, and in particular to a hold-down mechanism, an airtightness testing hold-down device and an airtightness testing system.

### Background Art

During airtightness testing of products, for example, airtightness testing of battery packs, the products need to be inflated inside and held down outside in order to achieve a required internal pressure for testing. However, the traditional hold-down tooling structure, due to its structural design flaws, has poor compatibility and cannot meet the hold-down requirements of different surface profiles in testing.

CN209043555U discloses an airtightness testing device where vertically oriented pressing cylinders are fixedly mounted on an overhead frame. These cylinders extend their pistons to drive sealing blocks onto pre-set holes on a to-be-test battery casing, creating a sealed chamber for pressure testing.

### Summary of the Invention

Based on this, it is necessary to provide a hold-down mechanism, an airtightness testing hold-down device and an airtightness testing system, which have high compatibility and can meet the hold-down requirements of different surface profiles in testing. Aspects of the present invention are set out in the appended claims.

In a first aspect, the present application provides a hold-down mechanism, including: a bearing member; at least two hold-down structures, disposed apart on the bearing member, wherein each of the hold-down structures has a hold-down face, the hold-down structure is configured to be movable on the bearing member to adjust a distance D between the hold-down face and the bearing member in a preset direction; and a locking structure, used to restrict a moving operation of the hold-down structure.

In the above-mentioned hold-down mechanism, at least two hold-down structures are arranged on a bearing member and are the hold-down structures are configured to be movable on the bearing member. During testing, each of the hold-down structures is pressed against a unit under test. If the unit under test has an irregular or uneven surface, the distance D between each hold-down face and the bearing member is changed by moving each of the hold-down structures, such that each hold-down face can abut on the surface of the unit under test. Once in abutting, each of the hold-down structures is locked by a locking structure, such that a curved surface formed by joining the various hold-down faces well fits the surface of the unit under test, achieving effective profiling and ensuring that the entire surface of the unit under test is effectively held down. In this way, during airtightness testing, the unit under test avoids structural deformation caused by pressure difference between the inside and the outside. Moreover, by releasing the locking structure and adjusting each of the hold-down structures, the hold-down mechanism can be adaptively pressed on different shapes of units under test, thus achieving high comparability and meeting the hold-down requirements of different surface profiles in testing.

In some embodiments, each of the hold-down structures includes an adjusting member and a pressing member connected to the adjusting member, the hold-down face is disposed on the side of the pressing member facing away from the bearing member, the adjusting member is configured to be movable on the bearing member, and the locking structure is used to restrict a moving operation of the adjusting member. In this way, the hold-down structure is designed as the adjusting member and the pressing member, so that each hold-down face is allowed to abut on the unit under test by moving the adjusting member only in the hold-down process. Once in abutting, the moving of the adjusting member is simply restricted by the locking structure, thus facilitating convenience in the hold-down operation.

In some embodiments, the adjusting member is configured to be movable on the bearing member in the preset direction, and the locking structure is used to lock the adjusting member onto the bearing member. In this way, the adjusting member has a relative movement manner as designed, which brings more convenience to the adjustment of the distance between the hold-down face and the bearing member, thereby facilitating further improvement of the testing efficiency of the unit under test.

In some embodiments, the bearing member is provided with through-holes corresponding to the hold-down structures, and the adjusting member slidably penetrates the through-hole. In this way, with the through-hole, the adjusting member is allowed to move smoothly relative to the bearing member, which brings more convenience to the adjustment of the distance between the hold-down face and the bearing member, thereby facilitating improvement of the airtightness testing efficiency.

In some embodiments, a unit under test has matching regions corresponding one-to-one with the hold-down faces, and each of the adjusting members has a moving range L greater than a height difference h between the matching region in the highest position and the matching region in the lowest position. In this way, the moving range of the adjusting member is controlled reasonably, ensuring that all the hold-down faces can abut on a surface under test, and achieving an effective profiling effect.

In some embodiments, the pressing member is provided with a first guide portion, the bearing member is provided with a second guide portion, and the first guide portion and the second guide portion are in guided fit in the preset direction. In this way, the pressing member is adjusted more smoothly in the preset direction, preventing the hold-down structure from being stuck due to offset in the hold-down process, and facilitating improvement of the airtightness testing efficiency.

In some embodiments, the first guide portion is a guide hole, and the second guide portion is a guide shaft penetrating the guide hole. With such a design, the matching between the guide hole and the guide shaft enables the pressing member to be adjusted more smoothly on the bearing member, thus facilitating improvement of the airtightness testing efficiency.

In some embodiments, a linear bearing is inserted inside the guide hole, and the guide shaft penetrates an inner race of the linear bearing. In this way, sliding smoothness of the guide shaft in the guide hole is further improved.

In some embodiments, at least two first guide portions are provided, and all the first guide portions are spaced around the adjusting member. In this way, the pressing member is effective guided in the circumferential direction during distance adjustment, so that the distance between the hold-down face and the bearing member is adjusted more smoothly, bringing a better profiling effect to the unit under test.

In some embodiments, the locking structure includes at least two locking members, the locking members correspond one-to-one with the hold-down structures, and the locking members are used to restrict moving operations of the corresponding hold-down structures. In this way, the locking operation on each of the hold-down structures is performed by the corresponding independent locking member, thus making the hold-down operation independent and facilitating the hold-down operation in testing.

In a second aspect, the present application provides an airtightness testing hold-down device, including: a hold-down mechanism as any one of the above; and an actuator, drivingly connected to the bearing member and used to drive the bearing member to move towards or away from the unit under test in the preset direction. In this way, each of the hold-down structures is adjusted adaptively in the hold-down process for testing, ensuring that each hold-down face can abut on the unit under test, thus achieving effective profiling and improving the airtightness testing efficiency.

In some embodiments, the airtightness testing hold-down device further includes a sensor and a controller, and the unit under test has matching regions corresponding one-to-one with the hold-down faces; wherein the sensor is configured to: when the bearing member moves until one of the hold-down faces comes into contact with the matching region in the lowest position on the unit under test, the sensor sends a trigger signal to the controller to control the actuator to stop working. With such a design, the sensor is used to determine whether all the s abut on the unit under test, to automatically control the actuator to stop working, thus achieving automatic control of the airtightness testing process and improving the testing efficiency.

In some embodiments, the airtightness testing hold-down device further includes a limiting member disposed on the bearing member, and when the bearing member moves until one of the hold-down faces comes into contact with the matching region in the lowest position on the unit under test, the sensor fits the limiting member in a sensing manner. In this way, whether all the hold-down faces abut on the unit under test can be determined accurately by the matching between the limiting member and the sensor, which facilitates improving the hold-down effect on the unit under test.

In some embodiments, the airtightness testing hold-down device further includes a holder, the actuator includes a body and a drive shaft driven by the body to extend or retract, the body is mounted on the holder, and the drive shaft is connected to the bearing member. In this way, power output of the drive shaft to the bearing member is facilitated, and more stable movement of the bearing member is ensured.

In a third aspect, the present application provides an image processing system, including: an airtightness testing hold-down device as any one of the above; and an airtightness tester, used to acquire a pressure change value of the unit under test after inflation.

The airtightness testing system uses the above-mentioned hold-down structure. During airtightness testing, the unit under test avoids structural deformation caused by pressure difference between the inside and the outside. Moreover, by releasing the locking structure and adjusting each of the hold-down structures, the hold-down mechanism can be adaptively pressed on different shapes of units under test, thus achieving high comparability and meeting the hold-down requirements of different surface profiles in testing.

In some embodiments, the airtightness testing system further includes a support, and the airtightness testing hold-down device is mounted on the support. In this way, the airtightness testing hold-down device is fixed steadily by means of the support, ensuring that the airtightness testing is performed stably.

In some embodiments, the airtightness testing system further includes a carrying apparatus, the carrying apparatus being used to carry the unit under test to be under the airtightness testing hold-down device. In this way, the unit under test is carried to be under the airtightness testing hold-down device by means of the carrying apparatus, which is conducive to improving the automation of the airtightness testing system and improving the testing efficiency.

The above description is only an overview of the technical solutions of the present application. In order to more clearly understand the technical means of the present application to implement same according to the contents of the description, and in order to make the above and other objectives, features and advantages of the present application more obvious and understandable, specific implementations of the present application are exemplarily described below.

### Brief Description of the Drawings

In order to illustrate the technical solutions in the embodiments of the present application or in the prior art more clearly, the drawings required in the description of the embodiments or in the prior art will be described briefly below. Obviously, the drawings described below merely show the embodiments of the present application, and for those of ordinary skilled in the art, other drawings can be obtained from the disclosed drawings without involving any inventive effort.
Fig. 1 is a schematic structural diagram of a hold-down mechanism according to some embodiments of the present application;
Fig. 2 is a schematic diagram of a hold-down structure according to some embodiments of the present application;
Fig. 3 is a schematic diagram showing the matching between a hold-down mechanism and a carrying apparatus according to some embodiments of the present application;
Fig. 4 is a schematic structural diagram of an airtightness testing hold-down device according to some embodiments of the present application; and
Fig. 5 is a schematic structural diagram of an airtightness testing system according to some embodiments of the present application.

100. Hold-down mechanism; 10. Bearing member; 11. Through-hole; 12. Second guide portion; 121. Guide hole; 122. Linear bearing; 20. Hold-down structure; 21. Hold-down face; 22. Adjusting member; 23. Pressing member; 24. First guiding member; 241. Guide shaft; 242. Limiting portion; 30. Locking structure; 31 Locking member; 200. Actuator; 210. Body; 220. Drive shaft; 300. Sensor; 310. Limiting member; 400. Holder; 410. Base; 420. Frame; 500. Airtightness tester; 600. Support; 610. Stand column; 620. Support frame; 700. Unit under test; 710. Matching region; 800. Carrying apparatus; X. Preset direction.

### Detailed Description of Embodiments

Embodiments of the technical solutions of the present application will be described in detail below with reference to the accompanying drawings. The following embodiments are merely intended to more clearly illustrate the technical solutions of the present application, so they merely serve as examples, but are not intended to limit the scope of protection of the present application.

Unless otherwise defined, all technical and scientific terms used herein have the same meanings as those commonly understood by those skilled in the art to which the present application belongs. The terms used herein are merely for the purpose of describing specific embodiments, but are not intended to limit the present application. The terms "comprising" and "having" and any variations thereof in the description and the claims of the present application as well as the brief description of the accompanying drawings described above are intended to cover non-exclusive inclusion.

In the description of the embodiments of the present application, the technical terms "first", "second", etc. are merely used for distinguishing different objects, and are not to be construed as indicating or implying relative importance or implicitly indicating the number, particular order or primary-secondary relationship of the indicated technical features. In the description of the embodiments of the present application, the phrase "a plurality of" means two or more, unless otherwise explicitly and specifically defined.

The phrase "embodiment" mentioned herein means that the specific features, structures, or characteristics described in conjunction with the embodiment can be encompassed in at least one embodiment of the present application. The phrase at various locations in the description does not necessarily refer to the same embodiment, or an independent or alternative embodiment exclusive of another embodiment. Those skilled in the art understand explicitly or implicitly that the embodiment described herein may be combined with another embodiment.

In the description of the embodiments of the present application, the term "and/or" is merely intended to describe the associated relationship of associated objects, indicating that three relationships can exist, for example, A and/or B can include: only A exists, both A and B exist, and only B exists. In addition, the character "/" herein generally indicates an "or" relationship between the associated objects.

In the description of the embodiments of the present application, the term "a plurality of" means two or more (including two), similarly the term "a plurality of groups" means two or more groups (including two groups), and the term "a plurality of pieces" means two or more pieces (including two pieces).

In the description of the embodiments of the present application, the orientation or position relationship indicated by the technical terms "central", "longitudinal", "transverse", "length", "width", "thickness", "upper", "lower", "front"; "rear", "left", "right", "vertical", "horizontal", "top", "bottom", "inner", "outer", "clockwise", "counterclockwise", "axial", "radial", "circumferential", etc. are based on the orientation or position relationship shown in the accompanying drawings and are merely intended to facilitate and simplify the description of the embodiments of the present application, rather than indicating or implying that the apparatus or element considered must have a particular orientation or be constructed and operated in a particular orientation, and therefore not to be construed as limiting the embodiments of the present application.

In the description of the embodiments of the present application, unless otherwise explicitly specified and defined, the technical terms such as "mount", "couple", "connect", and "fix" should be understood in a broad sense, for example, they may be a fixed connection, a detachable connection, or an integrated connection; may be a mechanical connection or an electric connection; and may be a direct connection or an indirect connection by means of an intermediate medium, or may be communication between interiors of two elements or interaction between the two elements. For those of ordinary skill in the art, the specific meanings of the above terms in the embodiments of the present application can be understood according to specific situations.

When products are brought to market or enter the post-process, they need to be tested for performance, such as air tightness and insulation. The reliability of these testing results has a direct impact on the stability of product quality, so it is particularly important to improve the reliability of testing results for product quality control.

For ease of understanding, the airtightness testing of a battery pack is used as an example, but it should be noted that this should not be interpreted as limiting the scope of protection of the present application. In the airtightness testing process of the battery pack, the inside of the battery pack is inflated to determine whether a pressure leak will occur inside the battery pack. However, in the inflation process, bulging of the battery pack may be caused, resulting in structural deformation, which not only leads to the destruction of the original structure of the battery pack, but also affects the airtightness testing results.

To improve the reliability of the airtightness testing results, a pressing plate matching the surface of the battery pack is usually used, which is pressed against the surface of the battery pack during the inflation process, so that the pressure inside and outside the battery pack is balanced and the reliability of the testing results is not affected by structural deformation.

However, the present applicant noticed that in the airtightness testing process, battery packs have different surface profiles due to the difference of model or specification, resulting in the need to provide a variety of matching pressing plates during testing , which leads to the airtightness testing hold-down device having a poor compatibility and failing to effectively meet the hold-down requirements of different surface profiles in testing, thus resulting in a decrease in the airtightness testing efficiency.

In order to solve the problem of compatibility of the airtightness testing hold-down device, the applicant has designed a hold-down mechanism after intensive research. The hold-down structure is configured to be movable on the bearing member in order to adjust a distance D between a hold-down face and a bearing member in a preset direction. Moreover, a locking structure can restrict a moving operation of each of hold-down structures.

At least two hold-down structures are arranged on the bearing member and the hold-down structures are configured to be movable on the bearing member. During testing, each of the hold-down structures is pressed against a unit under test. If the unit under test has an irregular or uneven surface, the distance D between each hold-down face and the bearing member is changed by moving each of the hold-down structures, such that each hold-down face can abut on the surface of the unit under test.

Once in abutting, each of the hold-down structures is locked by a locking structure, such that a curved surface formed by joining the various hold-down faces well fits the surface of the unit under test, achieving effective profiling and ensuring that the entire surface of the unit under test is effectively held down. In this way, during airtightness testing, the unit under test avoids structural deformation caused by pressure difference between the inside and the outside. Moreover, by releasing the locking structure and adjusting each of the hold-down structures, the hold-down mechanism can be adaptively pressed on different shapes of units under test, thus achieving high comparability and meeting the hold-down requirements of different surface profiles in testing.

The present application provides a hold-down mechanism that can be used in any testing where a hold-down operation is required, not only in the airtightness testing of a battery pack.

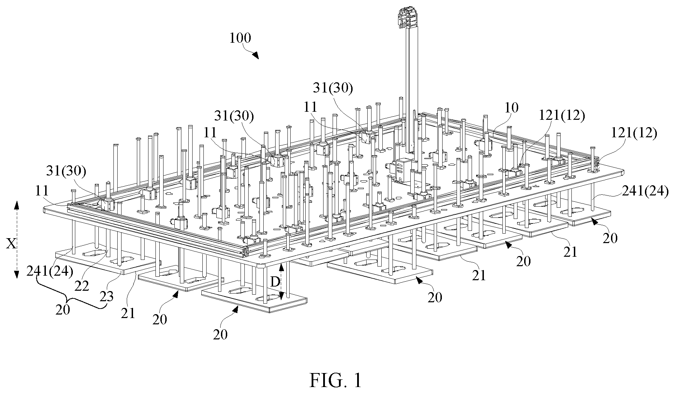

According to some embodiments of the present application, referring to Fig. 1, the present application provides a hold-down mechanism 100. The hold-down mechanism 100 includes: a bearing member 10 and at least two hold-down structures 20. The at least two hold-down structures 20 are disposed apart on the bearing member 10. Each of the hold-down structures 20 has a hold-down face 21, the hold-down structure 20 is configured to be movable on the bearing member 10 to adjust a distance D between the hold-down face 21 and the bearing member 10 in a preset direction X. The locking structure 30 is used to restrict a moving operation of the hold-down structure 20.

The bearing member 10 is a structure on which a plurality of hold-down structures 20 can be mounted at intervals, and has a certain structural rigidity in order to transmit pressure to the plurality of hold-down structures 20 during the hold-down process of the unit under test 700. The material of the bearing member 10 is not specifically limited, as long as the hold-down structure 20 can hold down the unit under test 700. Alternatively, to facilitate the spacing of the plurality of hold-down structures 20, the bearing member 10 may be designed as, but is not limited to, a platelike structure. Herein, the unit under test 700 may be, but is not limited to, a battery pack.

The hold-down structure 20 is a structure that is movable on the bearing member 10 and is capable of applying pressure to the unit under test 700. The way in which the hold-down structure 20 moves on the bearing member 10 may be in the form that the hold-down structure 20 moves relative to the bearing member 10, or the hold-down structure 20 may itself have a movable function, for example: the hold-down structure 20 is a multi-sectional telescopic bar, a retractable shear fork structure, and the like.

The hold-down face 21 is a side face of the hold-down structure 20 in contact with the unit under test 700, which may be a flat surface, a curved surface, or the like. Moreover, in order to avoid a rigid contact between the hold-down face 21 and the unit under test 700, which may lead to a breakage or dent in the structure, the hold-down face 21 may be provided with a flexible layer, for example: a rubber layer and a fabric layer.

The locking structure 30 is a structure capable of restricting a moving operation of the hold-down structure 20, for example: when the hold-down face 21 of each of the hold-down structures 20 abuts on the unit under test 700, the hold-down structure 20 can be locked by means of the locking structure 30 so that it cannot be moved. In this case, the distance D between the hold-down face 21 and the bearing member 10 cannot be adjusted, that is, each hold-down face 21 fits on the surface of the unit under test 700.

The locking structure 30 restricts the moving operation of the hold-down structure 20, which may be implemented in a manner on the basis of the type of movement of the hold-down structure 20, for example: when the movement of the hold-down structure 20 is a movement relative to the bearing member 10, such as the hold-down structure 20 moving relative to the bearing member 10, the locking structure 30 may fix the hold-down structure 20 onto the bearing member 10 so that it cannot be relatively moved in the locking process; in this case, the locking structure 30 may be, but is not limited to, a pin, a nut, a holding device, a KP lock (a standard part, the specific structure can be directly referred to existing products and will not be repeated here), while it may also be an electric device, that is, the locking structure 30 is automatically triggered to lock the hold-down structure 20 after the adjustment of each of the hold-down faces 21 is completed. When the movement of the hold-down structure 20 refers to its own movement, the locking structure 30 only needs to restrict the moving function of the hold-down structure 20 , for example: locking the joint in the hold-down structure 20 so that it cannot rotate or extend or retract.

When locking each of the hold-down structures 20 by the locking structure 30, the moving operations of all the hold-down structures 20 may be restricted simultaneously by means of the same component in the locking structure 30, or the moving operations of the hold-down structures 20 may be restricted by a plurality of components in the locking structure 30 corresponding one-to-one therewith.

During airtightness testing, the unit under test 700 avoids structural deformation caused by pressure difference between the inside and the outside. Moreover, by releasing the locking structure 30 and adjusting each of the hold-down structures 20, the hold-down mechanism 100 can be adaptively pressed on different shapes of units under test 700, thus achieving high comparability and meeting the hold-down requirements of different surface profiles in testing.

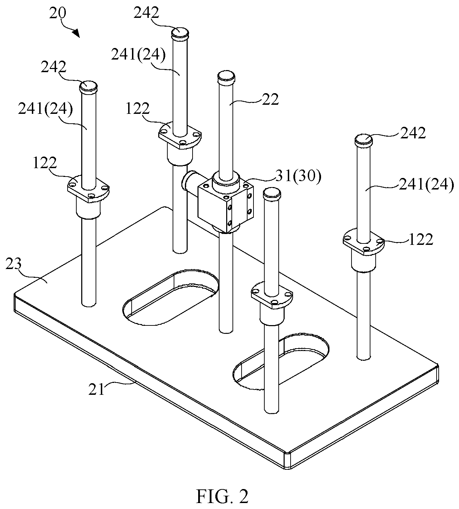

According to some embodiments of the present application, referring to Fig. 2, each of the hold-down structures 20 includes an adjusting member 22 and a pressing member 23 connected to the adjusting member 22. The hold-down face 21 is arranged on the side of the pressing member 23 facing away from the bearing member 10. The adjusting member 22 is configured to be movable on the bearing member 10, and the locking structure 30 is used to restrict the moving operation of the adjusting member 22.

The adjusting member 22 is a structure that can be operated movably on the bearing member 10 to drive the pressing member 23 to change the distance between the hold-down face 21 and the bearing member 10. The movement of the adjusting member 22 on the bearing member 10 may be relative movement, relative extending or retracting movement, or the like.

The pressing member 23 is a component that is in direct contact with the unit under test 700. In order to enable the surface of the unit under test 700 to have a certain pressure, the pressing member 23 needs to have a certain rigidity to avoid bending when the unit under test 700 is held down.

The connection between the adjusting member 22 and the pressing member 23 may be, but is not limited to, bolted connection, threaded coupling, snap fit, riveting, welding, bonding, integrated molding, and the like. The integrated molding may be a process such as die-casting, injection molding, and extrusion.

The hold-down structure 20 is designed as the adjusting member 22 and the pressing member 23, so that each hold-down face 21 is allowed to abut on the unit under test 700 by moving the adjusting member 22 only in the hold-down process. Once in abutting, the moving operation of the adjusting member 22 is simply restricted by the locking structure 30. This brings more convenience to the hold-down operation.

According to some embodiments of the present application, referring to Figs. 1 and 2, the adjusting member 22 is configured to move on the bearing member 10 in the preset direction X. The locking structure 30 is used to lock the adjusting member 22 onto the bearing member 10.

The adjusting member 22 moves on the bearing member 10 in the preset direction X, which may be implemented by forming a hole in the bearing member 10 so that the adjusting member 22 can slide up and down; alternatively, the bearing member 10 is provided with an internal threaded hole and the adjusting member 22 is provided with an external thread , so that the adjusting member 22 is driven to move relative to the bearing member 10 by threaded fit, and the like.

There are various ways in which the locking structure 30 locks the adjusting member 22 onto the bearing member 10, for example: the locking structure 30 may be designed as two clamp structures fixed onto the bearing member 10, and the two clamp structures are closed to each other when each hold-down face 21 abuts on the unit under test 700 so as to clamp the adjusting member 22.

The adjusting member 22 has a relative movement manner as designed, which brings more convenience to the adjustment of the distance between the hold-down face 21 and the bearing member 10, thereby facilitating further improvement of the testing efficiency of the unit under test 700.

According to some embodiments of the present application, referring to Fig. 1, the bearing member 10 is provided with through-holes 11 corresponding to the hold-down structures 20, and the adjusting member 22 slidably penetrates the through-hole 11.

In the hold-down process, the pressing member 23, which first comes into contact with the unit under test 700, continues to press along with the downward pressing of the bearing member 10. The pressing member 23 reacts on the adjusting member 22 to drive it to move relative to the bearing member 10 in the through-hole 11, ensuring that the bearing member 10 continues to move with the pressing member 23 that is not in contact with the unit under test 700 towards the side of the unit under test 700, so that each pressing member 23 is allowed to abut on the unit under test 700 to complete the profiling of each hold-down face 21 to the surface of the unit under test 700.

The number of through-holes 11 should be the same as the number of hold-down structures 20, that is, one adjusting member 22 penetrates one through-hole 11 correspondingly. The shape of the through-hole 11 may or may not be consistent with the cross-sectional shape of the adjusting member 22. Of course, if the shape of the through-hole 11 corresponds to the cross-sectional shape of the adjusting member 22, the adjusting member 22 moves in the through-hole 11 more smoothly.

In addition, to prevent the adjusting member 22 from falling out of the through-hole 11, a limiting portion 242 may be arranged at one end of the adjusting member 22, for example: the dimension such as the cross-sectional area or length of this limiting member 242 is greater than the corresponding dimension of the through-hole 11.

With the through-hole 11, the adjusting member 22 is allowed to move smoothly relative to the bearing member 10, which brings more convenience to the adjustment of the distance between the hold-down face 21 and the bearing member 10, thereby facilitating improvement of the airtightness testing efficiency.

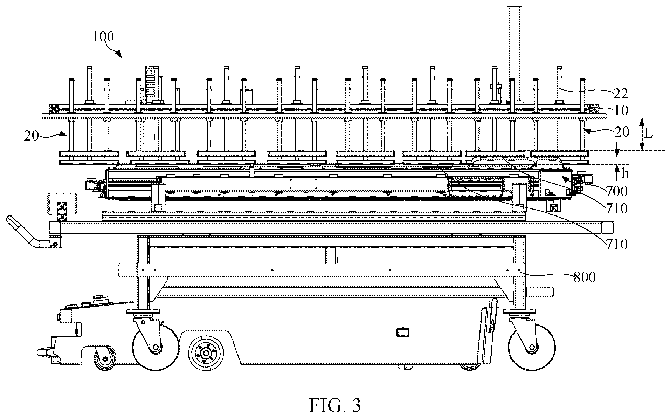

According to some embodiments of the present application, referring to Fig. 3, the unit under test 700 has matching regions 710 corresponding one-to-one with the hold-down faces 21. Each of the adjusting members 22 has a moving range L greater than a height difference h between the matching region 710 in the highest position and the matching region 710 in the lowest position.

The moving range L of the adjusting member 22 is the maximum displacement that the adjusting member 22 can move on the bearing member 10, for example: when the adjusting member 22 moves up, the pressing member 23 abuts on the bearing member 10, and in this case, the moving distance of the adjusting member 22 is the moving range L of the adjusting member 22. The matching region 710 in the highest position is the portion, with the highest protrusion, of the surface of the unit under test 700. The matching region 710 in the lowest position is the portion, with the deepest recess, of the surface of the unit under test 700.

The moving range of the adjusting member 22 in the bearing member 10 directly determines an adjustment range of the distance D between the pressing member 23 and the bearing member 10, for example: the moving range L of the adjusting member 22 is 150 mm to 450 mm. If the moving range of the adjusting member 22 is less than the height difference h between two of the matching regions 710, it will lead to the circumstance that one of the pressing members 23 abuts on the bearing member 10 while the other pressing member 23 has not be in contact with the corresponding matching region 710, so that it is impossible to ensure that all the hold-down faces 21 can abut on the surface under test, making it impossible to achieve an effective profiling effect. Of course, in order to ensure the moving range of the adjusting member 22 on the bearing member 10, the adjusting member 22 can be directly lengthened during the actual production.

The moving range of the adjusting member 22 is controlled reasonably, ensuring that all the hold-down faces 21 can abut on the surface under test, and achieving an effective profiling effect.

According to some embodiments of the present application, referring to Fig. 1, the pressing member 23 is provided with a first guide portion 24. The bearing member 10 is provided with a second guide portion 12. The first guide portion 24 and the second guide portion 12 are in guided fit in the preset direction X.

The first guide portion 24 may be a column or rod-like structure and the second guide portion 12 a slot or hole-like structure; alternatively, the first guide portion 24 may be a slot or hole-like structure and the second guide portion 12 is a column or rod-like structure. It should be noted that when the first guide portion 24 is a slot or hole-like structure and the second guide portion 12 is a column or rod-like structure, the second guide portion 12 should avoid abutting on the unit under test 700 to cause structural interference in the hold-down process, in this case, the first guide portion 24 may be arranged on the portion of the pressing member 23 that extends beyond the unit under test 700.

Since the first guide portion 24 and the second guide portion 12 are in guided fit, the pressing member 23 is adjusted more smoothly in the preset direction X, preventing the hold-down structure 20 from being stuck due to offset in the hold-down process, thus facilitating improvement of the airtightness testing efficiency.

According to some embodiments of the present application, referring to Fig. 1, the first guide portion 24 is a guide hole 121. The second guide portion 12 is a guide shaft 241 penetrating the guide hole 121.

The cross-sectional shape of the guide shaft 241 should be consistent with the shape of the guide hole 121 so that the guide shaft 241 moves in the guide hole 121 more smoothly. Moreover, the first guide portion 24 is designed as the guide hole 121 and the second guide portion 12 is designed as the guide shaft 241, so that the guide shaft 241 does not abut on the unit under test 700 to cause structural interference when an effective guide effect is achieved.

With such a design, the matching between the guide hole 121 and the guide shaft 241 enables the pressing member 23 to be adjusted more smoothly on the bearing member 10, which facilitates improvement of the airtightness testing efficiency.

According to some embodiments of the present application, referring to Fig. 2, a linear bearing 122 is inserted inside the guide hole 121. The guide shaft 241 penetrates an inner race of the linear bearing 122.

The linear bearing 122 is a linear motion system for linear travel and used with a cylindrical shaft. According to the shape, linear bearings may be divided into straight type, flange type, open type, and the like.

Since the linear bearing 122 is disposed in the guide hole 121, sliding smoothness of the guide shaft 241 in the guide hole 121 is further improved.

According to some embodiments of the present application, referring to Fig. 2, at least two first guide portions 24 are provided, and all the first guide portions 24 are spaced around the adjusting member 22.

The number of first guide sections 24 may be two, three or more , as to the exact number depending on the actual dimension of the pressing member 23 and the design requirements, for example: there are four first guide portions 24, two of the first guide portions 24 are located on one side of the adjusting member 22, and the other two first guide portions 24 are located on the other side of the adjusting member 22.

Since all the first guide portions 24 are spaced around the adjusting member 22, the pressing member 23 is effective guided in the circumferential direction during distance adjustment, so that the distance between the hold-down face 21 and the bearing member 10 is adjusted more smoothly, bringing a better profiling effect to the unit under test 700.

According to some embodiments of the present application, referring to Fig. 1, the locking structure 30 includes at least two locking members 31. The locking members 31 correspond one-to-one with the hold-down structures 20, and the locking members 31 are used to restrict moving operations of the corresponding hold-down structures 20.

The locking member 31 is a structure capable of restricting the moving operation of the hold-down structure 20 so that the distance D between each hold-down face 21 and the bearing member 10 cannot continue to be adjusted after adjustment. The locking member 31 may be, but is not limited to, a pin, a nut, a holding device, a KP lock, and the like.

Since the locking structure 30 is designed as a plurality of locking members 31, the locking operation on each of the hold-down structures 20 is performed by the corresponding locking member 31, thus making the hold-down operation independent and facilitating the hold-down operation in testing.

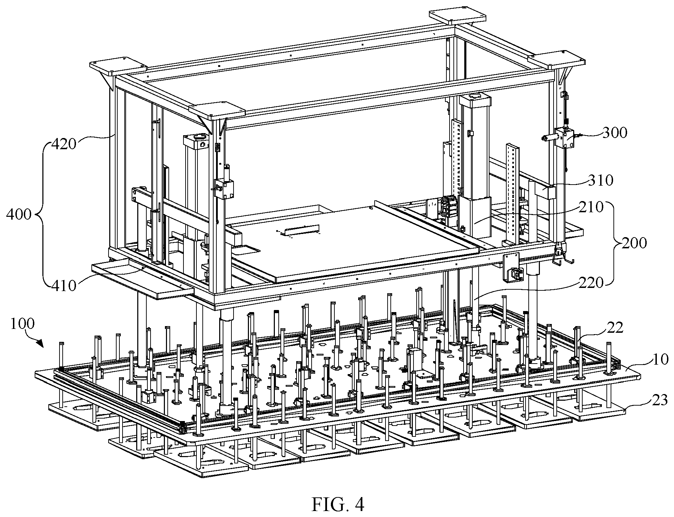

According to some embodiments of the present application, referring to Fig. 4, the present application provides an airtightness testing hold-down device. The airtightness testing hold-down device includes: an actuator 200 and a hold-down mechanism 100 as in any one of the above solutions. The actuator 200 is drivingly connected to the bearing member 10 and used to drive the bearing member 10 to move towards or away from the unit under test 700 in the preset direction X.

The actuator 200 is a device capable of driving the hold-down mechanism 100 moving in the preset direction X towards or away from the unit under test 700, for example: it may be a cylinder, a hydraulic cylinder, and an electric cylinder. Of course, it may also be a combination structure of a motor and a transmission mechanism, for example: a combination structure of a motor and a gear and rack, and a combination structure of a motor, a lead screw and a slider.

The actuator 200 drives the bearing member 10 to move in the preset direction X, and the distance D between the hold-down face 21 and the bearing member 10 is also adjusted in the preset direction X. Therefore, in the hold-down process for testing, the actuator 200 drives the bearing member 10 to move in the preset direction X to close to the unit under test 700, the hold-down structure 20 first coming into contact with the unit under test 700 will be adaptively adjusted in the preset direction X, so that the bearing member 10 drives the rest of the hold-down structures 20, which do not touch the unit under test 700, to abut on the unit under test 700 sequentially. The whole process is automatically adjusted to ensure that each hold-down face 21 can be pressed against the unit under test 700, thus achieving effective profiling.

Since the actuator 200 is used for driving the bearing member 10 to move in the preset direction X, each of the hold-down structures 20 is adjusted adaptively in the hold-down process for testing, ensuring that each hold-down face 21 can be pressed against the unit under test 700, thus achieving effective profiling and improving the airtightness testing efficiency.

According to some embodiments of the present application, referring to Fig. 4, the airtightness testing hold-down device further includes a sensor 300 and a controller. The unit under test 700 has matching regions 710 corresponding one-to-one with the hold-down faces 21. The sensor 300 is configured to: when the bearing member 10 moves until one of the hold-down faces 21 comes into contact with the matching region 710 in the lowest position on the unit under test 700, the sensor 300 sends a trigger signal to the controller to control the actuator 200 to stop working.

The controller is a device having functions such as processing, computing, and execution, for example: it may be, but is not limited to, an editable logic controller, an electronic control unit, a single-chip microcomputer, and the like.

The sensor 300 is a device that receives a signal or stimulation and reacts, and is an apparatus capable of converting the physical or chemical quantity under test into another corresponding output, for example: an infrared sensor, and a pressure-sensitive sensor. The sensor 300 is electrically connected to the controller and can send a trigger signal to the controller.

Moreover, the controller may be electrically connected to the locking structure 30, that is, the locking structure 30 is an electric-control device. When receiving the trigger signal, the controller controls the actuator 200 to stop working, and the locking structure 30 starts working to lock each of the hold-down structures 20.

If one of the hold-down faces 21 is in contact with the matching region 710 in the lowest position, it means that all of the hold-down faces 21 abut on the unit under test 700, thus a profiling operation of the unit under test 700 is completed. In this case, the sensor 300 can be triggered in a variety of ways, for example: the sensor 300 is arranged on the matching region 710 in the lowest position or on the corresponding hold-down face 21, such as a sensor chip; alternatively, a covering structure is arranged on the bearing member 10, which will cover the sensor 300 if the hold-down face 21 is in contact with the matching region 710 in the lowest position.

The sensor 300 is used to determine whether all the hold-down faces 21 are on the unit under test 700, so that the actuator 200 can be automatically controlled to stop working, achieving automatic control of the airtightness testing process and improving the testing efficiency.

According to some embodiments of the present application, referring to Fig. 4, the airtightness testing hold-down device further includes a limiting member 310 disposed on the bearing member 10. When the bearing member 10 moves until one of the hold-down faces 21 comes into contact with the matching region 710 in the lowest position on the unit under test 700, the sensor 300 fits the limiting member 310 in a sensing manner.

The limiting member 310 may be designed as a sheet structure, or as a rod-like structure, or the like. When one of the hold-down faces 21 is in contact with the matching region 710 in the lowest position on the unit under test 700, the limiting member 310, driven by the bearing member 10, moves just within a sensing range of the sensor 300, so that the sensor 300 acquires the corresponding signal.

Whether all the hold-down faces 21 abut on the unit under test 700 can be determined accurately by the matching between the limiting member 310 and the sensor 300, which facilitates improvement of the hold-down effect on the unit under test 700.

According to some embodiments of the present application, referring to Fig. 4, the airtightness testing hold-down device further includes a holder 400. The actuator 200 includes a body 210 and a drive shaft 220 driven by the body 210 to extend or retract. The body 210 is mounted on the holder 400, and the drive shaft 220 is connected to the bearing member 10.

The body 210 is the part of the actuator 200 that is capable of power output, for example: a cylinder block of an air cylinder, a hydraulic cylinder, an electric cylinder, or other devices. The body 210 may be connected onto the holder 400 by bolted connection, snap fit, riveting, pin jointing, welding, or the like.

The holder 400 is a structure that supports the power output of the actuator 200 to the bearing member 10. There are various structural designs for the holder 400, for example: the holder 400 includes a base 410 and a frame 420 connected to the base 410, the body 210 is fixed onto the base 410, and the drive shaft 220 is connected to the bearing member 10 through the base 410. Moreover, the frame 420 is fixed during actual operation.

Since the body 210 is fixed onto the holder 400, power output of the drive shaft 220 to the bearing member 10 is facilitated, and more stable movement of the bearing member 10 is ensured.

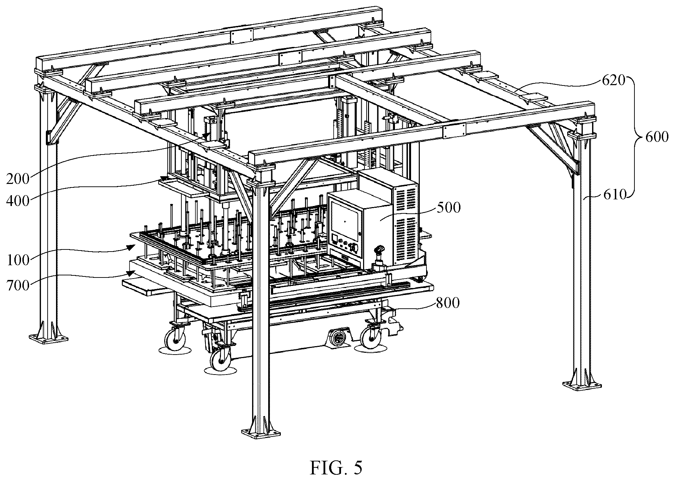

According to some embodiments of the present application, referring to Fig. 5, the present application provides an airtightness testing system. The airtightness testing system includes: an airtightness tester 500 and the airtightness testing hold-down device as in any of the above solution. The airtightness tester 500 is used to acquire a pressure change value of the unit under test 700 after inflation.

The airtightness tester 500 is an instrument capable of determining whether a leak has occurred inside the unit under test 700.

The airtightness testing system uses the above-mentioned hold-down structure 20. During airtightness testing, the unit under test 700 avoids structural deformation caused by pressure difference between the inside and the outside. Moreover, by releasing the locking structure 30 and adjusting each of the hold-down structures 20, the hold-down mechanism 100 can be adaptively pressed on different shapes of units under test 700, thus achieving high comparability and meeting the hold-down requirements of different surface profiles in testing.

According to some embodiments of the present application, referring to Fig. 5, the airtightness testing system further includes a support 600. The airtightness testing hold-down device is mounted on the support 600.

There are various structural designs for the support frame 600, as long as they can stably fix the airtightness testing hold-down device, for example: the support 600 includes a support frame 620 and a plurality of stand columns 610, and the support frame 620 is erected on all the stand columns 610. The airtightness testing hold-down device is fixed onto the support frame 620.

The airtightness testing hold-down device is fixed stably by means of the support 600, ensuring that the airtightness testing is performed stably.

According to some embodiments of the present application, referring to Fig. 5, the airtightness testing system further includes a carrying apparatus 800, the carrying apparatus 800 being used to carry the unit under test 700 to be under the airtightness testing hold-down device.

The carrying apparatus 800 refers to an apparatus that can automatically carry the unit under test 700, for example: an automated guided vehicle (AGV) provided with an optical device and the like.

The unit under test 700 is carried to be under the airtightness testing hold-down device by means of the carrying apparatus 800, which is conducive to improving the automation of the airtightness testing system and improving the testing efficiency.

According to some embodiments of the present application, referring to Figs. 1 to 5, the present application provides an airtightness testing adaptive hold-down fixture. The airtightness testing process includes that after the carrying apparatus 800 arrives at an airtightness testing station, the airtightness testing device is installed, a start button is pressed, the actuator 200 descends, and the testing is started after the hold-down mechanism 100 fits the unit under test 700. In the hold-down process, the entire adaptive hold-down mechanism 100 moves downwards under the action of the actuator 200, the hold-down face 21 of the pressing member 23 comes into contact with the surface of the unit under test 700, the protrusion of the unit under test 700 lifts the pressing member 23 upwards, and when the pressing member 23 descends to and makes contact with the matching region 710 at the lowest point of an upper surface of the unit under test 700, and the pressing member 23 is locked by the locking structure 30, the pressing member 23 achieves a profiling effect with the unit under test 700.

## Claims

1. A hold-down mechanism (100), comprising:
a bearing member (10);
at least two hold-down structures (20), disposed apart on the bearing member (10), wherein each of the hold-down structures (20) has a hold-down face (21) and is configured to be movable on the bearing member (10) to adjust a distance, D, between the hold-down face (21) and the bearing member (10) in a preset direction (X); and
wherein each of the hold-down structures (20) comprises an adjusting member (22) and a pressing member (23) connected to the adjusting member (22), and the hold-down face (21) is disposed on a side of the pressing member (23) facing away from the bearing member (10), **characterized in that**,
the hold-down mechanism (100) is comprising a locking structure (30), configured to restrict a movement operation of the hold-down structures (20); and that
the adjusting member (22) is configured to be movable on the bearing member (10) in the preset direction (X), and the locking structure (30) is configured to lock the adjusting member (22) onto the bearing member (10).

2. The hold-down mechanism (100) according to claim 1, wherein the bearing member (10) is provided with through-holes (11) corresponding to the hold-down structures (20), and the adjusting member (22) slidably penetrates the through-hole (11).

3. The hold-down mechanism (100) according to claim 1 or 2, wherein a unit under test (700) has matching regions (710) corresponding one-to-one with the hold-down faces (21), and each of the adjusting members (22) has a moving range, L, greater than a height difference, h, between the matching region (710) in the highest position and the matching region (710) in the lowest position.

4. The hold-down mechanism (100) according to any one of claims 1-3, wherein the pressing member (23) is provided with a first guide portion (24), the bearing member (10) is provided with a second guide portion (12), and the first guide portion (24) and the second guide portion (12) are in guided fit in the preset direction (X),
wherein preferably the first guide portion (24) is a guide hole (121), and the second guide portion (12) is a guide shaft (241) penetrating the guide hole (121),
wherein further preferably a linear bearing (122) is inserted inside the guide hole (121), and the guide shaft (241) penetrates an inner race of the linear bearing (122).

5. The hold-down mechanism (100) according to claim 4, wherein at least two first guide portions (24) are provided, and all the first guide portions (24) are spaced around the adjusting member (22).

6. The hold-down mechanism (100) according to any one of claims 1-5, wherein the locking structure (30) comprises at least two locking members (31), the locking members (31) correspond one-to-one with the hold-down structures (20), and the locking members (31) are configured to restrict movement operations of the corresponding hold-down structures (20).

7. An airtightness testing hold-down device, comprising:
a hold-down mechanism (100) according to any one of claims 1-6; and
an actuator (200), drivingly connected to the bearing member (10) and configured to drive the bearing member (10) to move towards or away from the unit under test (700) in the preset direction (X).

8. The airtightness testing hold-down device according to claim 7, wherein the airtightness testing hold-down device further comprises a sensor (300) and a controller, and the unit under test (700) has matching regions (710) corresponding one-to-one with the hold-down faces (21);
wherein the sensor (300) is configured such that: when the bearing member (10) moves until one of the hold-down faces (21) comes into contact with the matching region (710) in the lowest position on the unit under test (700), the sensor (300) sends a trigger signal to the controller to control the actuator (200) to stop working.

9. The airtightness testing hold-down device according to claim 8, wherein the airtightness testing hold-down device further comprises a limiting member (310) disposed on the bearing member (10), and when the bearing member (10) moves until one of the hold-down faces (21) comes into contact with the matching region (710) in the lowest position on the unit under test (700), the sensor (300) fits the limiting member (310) in a sensing manner.

10. The airtightness testing hold-down device according to any one of claims 7-9, wherein the airtightness testing hold-down device further comprises a holder (400), the actuator (200) comprises a body (210) and a drive shaft (220) driven by the body (210) to extend or retract, the body (210) is mounted on the holder (400), and the drive shaft (220) is connected to the bearing member (10).

11. An airtightness testing system, comprising:
an airtightness testing hold-down device according to any one of claims 7-10; and
an airtightness tester (500), configured to acquire a pressure change value of the unit under test (700) after inflation.

12. The airtightness testing system according to claim 11, wherein the airtightness testing system further comprises a support (600), and the airtightness testing hold-down device is mounted on the support (600).

13. The airtightness testing system according to claim 11 or 12, wherein the airtightness testing system further comprises a carrying apparatus (800), the carrying apparatus (800) configured to carry the unit under test (700) to be under the airtightness testing hold-down device.

## Patentansprüche

1. Niederhaltemechanismus (100), umfassend:
ein Lagerelement (10);
mindestens zwei Niederhaltestrukturen (20), die voneinander beabstandet auf dem Lagerelement (10) angeordnet sind, wobei jede der Niederhaltestrukturen (20) eine Niederhaltefläche (21) aufweist und konfiguriert ist, um bewegbar auf dem Lagerelement (10) zu sein, um eine Entfernung D zwischen der Niederhaltefläche (21) und dem Lagerelement (10) in einer voreingestellten Richtung (X) anzupassen; und
wobei jede der Niederhaltestrukturen (20) ein Anpassungselement (22) und ein Andrückelement (23), das mit dem Anpassungselement (22) verbunden ist, umfasst, und die Niederhaltefläche (21) an einer Seite des Andrückelements (23) angeordnet ist, die von dem Lagerelement (10) abgewandt ist, **dadurch gekennzeichnet, dass**
der Niederhaltemechanismus (100) eine Verriegelungsstruktur (30) umfasst, die konfiguriert ist, um einen Bewegungsvorgang der Niederhaltestrukturen (20) einzuschränken; und dass
das Anpassungselement (22) konfiguriert ist, um auf dem Lagerelement (10) in der voreingestellten Richtung (X) bewegbar zu sein, und die Verriegelungsstruktur (30) konfiguriert ist, um das Anpassungselement (22) an dem Lagerelement (10) zu verriegeln.

2. Niederhaltemechanismus (100) nach Anspruch 1, wobei das Lagerelement (10) mit Durchgangslöchern (11) versehen ist, die den Niederhaltestrukturen (20) entsprechen, und das Anpassungselement (22) verschiebbar das Durchgangsloch (11) durchdringt.

3. Niederhaltemechanismus (100) nach Anspruch 1 oder 2, wobei eine zu prüfende Einheit (700) passende Regionen (710) aufweist, die den Niederhalteflächen (21) eins zu eins entsprechen, und jedes der Anpassungselemente (22) einen Bewegungsbereich L aufweist, der größer ist als ein Höhenunterschied h zwischen der passenden Region (710) in der höchsten Position und der passenden Region (710) in der tiefsten Position.

4. Niederhaltemechanismus (100) nach einem der Ansprüche 1 bis 3, wobei das Andrückelement (23) mit einem ersten Führungsabschnitt (24) versehen ist, das Lagerelement (10) mit einem zweiten Führungsabschnitt (12) versehen ist und der erste Führungsabschnitt (24) und der zweite Führungsabschnitt (12) in der voreingestellten Richtung (X) in geführter Passung sind,
wobei vorzugsweise der erste Führungsabschnitt (24) ein Führungsloch (121) ist, und der zweite Führungsabschnitt (12) eine Führungswelle (241) ist, die das Führungsloch (121) durchdringt,
wobei ferner vorzugsweise ein Linearlager (122) in das Führungsloch (121) eingesetzt ist und die Führungswelle (241) einen Innenring des Linearlagers (122) durchdringt.

5. Niederhaltemechanismus (100) nach Anspruch 4, wobei mindestens zwei erste Führungsabschnitte (24) bereitgestellt sind und alle ersten Führungsabschnitte (24) um das Anpassungselement (22) herum beabstandet sind.

6. Niederhaltemechanismus (100) nach einem der Ansprüche 1 bis 5, wobei die Verriegelungsstruktur (30) mindestens zwei Verriegelungselemente (31) umfasst, die Verriegelungselemente (31) den Niederhaltestrukturen (20) eins zu eins entsprechen und die Verriegelungselemente (31) konfiguriert sind, um Bewegungsvorgänge der entsprechenden Niederhaltestrukturen (20) einzuschränken.

7. Luftdichtigkeitsprüfungs-Niederhaltevorrichtung, umfassend:
einen Niederhaltemechanismus (100) nach einem der Ansprüche 1 bis 6; und
einen Aktuator (200), der antriebsmäßig mit dem Lagerelement (10) verbunden und konfiguriert ist, um das Lagerelement (10) so anzutreiben, dass es sich in der voreingestellten Richtung (X) auf die zu prüfende Einheit (700) zu oder von dieser weg bewegt.

8. Luftdichtigkeitsprüfungs-Niederhaltevorrichtung nach Anspruch 7, wobei die Luftdichtigkeitsprüfungs-Niederhaltevorrichtung ferner einen Sensor (300) und eine Steuerung umfasst und die zu prüfende Einheit (700) passende Regionen (710) aufweist, die den Niederhalteflächen (21) eins zu eins entsprechen;
wobei der Sensor (300) so konfiguriert ist, dass: wenn sich das Lagerelement (10) so weit bewegt, bis eine der Niederhalteflächen (21) mit der Region (710) in der untersten Position an der zu prüfenden Einheit (700) in Kontakt kommt, der Sensor (300) ein Triggersignal an die Steuerung sendet, um den Aktuator (200) so zu steuern, dass er seinen Betrieb einstellt.

9. Luftdichtigkeitsprüfungs-Niederhaltevorrichtung nach Anspruch 8, wobei die Luftdichtigkeitsprüfungs-Niederhaltevorrichtung ferner ein an dem Lagerelement (10) angeordnetes Begrenzungselement (310) umfasst, und wenn sich das Lagerelement (10) so weit bewegt, bis eine der Niederhalteflächen (21) mit der passenden Region (710) in der untersten Position an der zu prüfenden Einheit (700) in Kontakt kommt, der Sensor (300) sich an das Begrenzungselement (310) in einer erfassenden Weise anpasst.

10. Luftdichtigkeitsprüfungs-Niederhaltevorrichtung nach einem der Ansprüche 7 bis 9, wobei die Luftdichtigkeitsprüfungs-Niederhaltevorrichtung ferner einen Halter (400) umfasst, wobei der Aktuator (200) einen Körper (210) und eine von dem Körper (210) angetriebene Antriebswelle (220) umfasst, um aus- oder einzufahren, der Körper (210) an dem Halter (400) montiert ist und die Antriebswelle (220) mit dem Lagerelement (10) verbunden ist.

11. Luftdichtigkeitsprüfsystem, umfassend:
eine Luftdichtigkeitsprüfungs-Niederhaltevorrichtung nach einem der Ansprüche 7 bis 10; und
einen Luftdichtigkeitsprüfer (500), der konfiguriert ist, um einen Druckänderungswert der zu prüfenden Einheit (700) nach dem Aufblasen aufzunehmen.

12. Luftdichtigkeitsprüfsystem nach Anspruch 11, wobei das Luftdichtigkeitsprüfsystem ferner einen Träger (600) umfasst und die Luftdichtigkeitsprüfungs-Niederhaltevorrichtung an dem Träger (600) montiert ist.

13. Luftdichtigkeitsprüfsystem nach Anspruch 11 oder 12, wobei das Luftdichtigkeitsprüfsystem ferner eine Trageeinrichtung (800) umfasst, wobei die Trageeinrichtung (800) konfiguriert ist, um die zu prüfende Einheit (700) unter die Luftdichtigkeitsprüfungs-Niederhaltevorrichtung zu tragen.

## Revendications

1. Mécanisme de retenue (100), comprenant :
un élément porteur (10) ;
au moins deux structures de retenue (20), disposées éloignées sur l'élément porteur (10), chacune des structures de retenue (20) comportant une face de retenue (21) et étant conçue pour être mobile sur l'élément porteur (10) pour ajuster une distance, D, entre la face de retenue (21) et l'élément porteur (10) dans une direction prédéfinie (X) ; et
chacune des structures de retenue (20) comprenant un élément de réglage (22) et un élément de pression (23) relié à l'élément de réglage (22), et la face de retenue (21) est disposée sur un côté de l'élément de pression (23) qui est orienté à l'opposé par rapport à l'élément porteur (10), **caractérisé en ce que**
le mécanisme de retenue (100) comprend une structure de verrouillage (30), conçue pour limiter une opération de déplacement de la structure de retenue (20) ; et **en ce que**
l'élément de réglage (22) est conçu pour être mobile sur l'élément porteur (10) dans la direction prédéfinie (X), et la structure de verrouillage (30) est conçue pour verrouiller l'élément de réglage (22) sur l'élément porteur (10).

2. Mécanisme de retenue (100) selon la revendication 1, dans lequel l'élément porteur (10) est pourvu de trous traversants (11) correspondant aux structures de retenue (20), et l'élément de réglage (22) pénètre de manière coulissante dans le trou traversant (11).

3. Mécanisme de retenue (100) selon la revendication 1 ou 2, dans lequel une unité en test (700) comporte des régions d'association (710) correspondant de manière univoque avec les faces de retenue (21), et chacun des éléments de réglage (22) comporte une plage de déplacement, L, supérieure à une différence de hauteur, h, entre la région d'association (710) dans la position la plus haute et la région d'association (710) dans la position la plus basse.

4. Mécanisme de retenue (100) selon l'une quelconque des revendications 1 à 3, dans lequel l'élément de pression (23) est pourvu d'une première partie de guidage (24), l'élément porteur (10) est pourvu d'une deuxième partie de guidage (12), et la première partie de guidage (24) et la deuxième partie de guidage (12) sont en ajustement guidé dans la direction prédéfinie (X),
dans lequel de préférence la première partie de guidage (24) est un trou de guidage (121), et la deuxième partie de guidage (12) est une tige de guidage (241) qui pénètre dans le trou de guidage (121),
dans lequel encore de préférence un palier linéaire (122) est inséré à l'intérieur du trou de guidage (121), et la tige de guidage (241) pénètre une bague intérieure du palier linéaire (122).

5. Mécanisme de retenue (100) selon la revendication 4, dans lequel au moins deux premières parties de guidage (24) sont fournies, et toutes les premières parties de guidage (24) sont espacées autour de l'élément de réglage (22).

6. Mécanisme de retenue (100) selon l'une quelconque des revendications 1 à 5, dans lequel la structure de verrouillage (30) comprend au moins deux éléments de verrouillage (31), les éléments de verrouillage (31) correspondent de manière biunivoque aux structures de retenue (20), et les éléments de verrouillage (31) sont conçus pour limiter des opérations de déplacement des structures de retenue correspondantes (20).

7. Dispositif de retenue pour test d'étanchéité à l'air, comprenant :
un mécanisme de retenue (100) selon l'une quelconque des revendications 1 à 6 ; et
un actionneur (200), raccordé en entraînement à l'élément porteur (10) et conçu pour amener l'élément porteur (10) à se déplacer vers ou à s'éloigner de l'unité en test (700) dans la direction prédéfinie (X).

8. Dispositif de retenue pour test d'étanchéité à l'air selon la revendication 7, dans lequel le dispositif de retenue pour test d'étanchéité à l'air comprend en outre un capteur (300) et un dispositif de commande, et l'unité en test (700) comporte des régions d'association (710) correspondant de manière biunivoque aux faces de retenue (21) ;
le capteur (300) étant conçu de telle sorte que : quand l'élément porteur (10) se déplace jusqu'à ce que l'une des faces de retenue (21) vienne en contact avec la région d'association (710) dans la position la plus basse sur l'unité en test (700), le capteur (300) envoie un signal de déclenchement au dispositif de commande pour commander à l'actionneur (200) de cesser de fonctionner.

9. Dispositif de retenue pour test d'étanchéité à l'air selon la revendication 8, le dispositif de retenue pour test d'étanchéité à l'air comprenant en outre un élément de limitation (310) disposé sur l'élément porteur (10), et quand l'élément porteur (10) se déplace jusqu'à ce que l'une des faces de retenue (21) vienne en contact avec la région d'association (710) dans la position la plus basse sur l'unité en test (700), le capteur (300) s'ajuste avec l'élément de limitation (310) de manière à pouvoir effectuer une détection.

10. Dispositif de retenue pour test d'étanchéité à l'air selon l'une quelconque des revendications 7 à 9, le dispositif de retenue pour test d'étanchéité à l'air comprenant en outre un dispositif de maintien (400), l'actionneur (200) comprenant un corps (210) et un arbre d'entraînement (220) amené par le corps (210) à s'étendre ou se rétracter, le corps (210) étant monté sur le dispositif de maintien (400), et l'arbre d'entraînement (220) étant raccordé à l'élément porteur (10).

11. Système de test d'étanchéité à l'air, comprenant :
un dispositif de retenue pour test d'étanchéité à l'air selon l'une quelconque des revendications 7 à 10 ; et
un dispositif de test d'étanchéité à l'air (500), conçu pour acquérir une valeur de changement de pression de l'unité en test (700) après un gonflage.

12. Système de test d'étanchéité à l'air selon la revendication 11, le système de test d'étanchéité à l'air comprenant en outre un support (600), et le dispositif de retenue pour test d'étanchéité à l'air étant monté sur le support (600).

13. Système de test d'étanchéité à l'air selon la revendication 11 ou 12, le système de test d'étanchéité à l'air comprenant en outre un appareil de transport (800), l'appareil de transport (800) étant conçu pour transporter l'unité en test (700) afin qu'elle se trouve sous le dispositif de retenue pour test d'étanchéité à l'air.
